# EUROPÄISCHE PATENTSCHRIFT

(11) **EP 4 000 378 B1**
(45) Veröffentlichungstag und Bekanntmachung des Hinweises auf die Patenterteilung: **10.01.2024**
(21) Anmeldenummer: 21195437.5
(22) Anmeldetag: 08.09.2021
(51) Int. Cl.: A01F 7/06, A01F 12/10, A01F 12/18, A01F 12/20

(54) **LANDWIRTSCHAFTLICHE ARBEITSMASCHINE MIT EINER TROMMEL**
AGRICULTURAL WORK MACHINE COMPRISING A DRUM
MACHINE DE TRAVAIL AGRICOLE DOTÉE D'UN TAMBOUR

(30) Priorität: 23.11.2020 DE 102020130846
(43) Veröffentlichungstag der Anmeldung: 25.05.2022
(73) Patentinhaber: CLAAS Selbstfahrende Erntemaschinen GmbH, 33428 Harsewinkel (DE)
(72) Erfinder: Take, Ulf, 49124 Georgsmarienhütte (DE); Specht, Norbert, 33428 Harsewinkel (DE); Prangemeier, Maik, 59302 Oelde (DE); Hay, Jonas, 23758 Oldenburg (DE); Theuer, Jan, 33330 Gütersloh (DE)
(74) Vertreter: CLAAS Gruppe

(56) Entgegenhaltungen:
- DE-A1-102004 048 084
- US-A- 5 035 675
- US-A- 6 036 598
- US-B1- 6 296 566

## Beschreibung

Die Erfindung betrifft eine landwirtschaftliche Arbeitsmaschine mit einer zylindrisch ausgebildeten Trommel gemäß dem Oberbegriff des Anspruchs 1. Landwirtschaftliche Arbeitsmaschinen umfassen unter anderem Mähdrescher, Feldhäcksler oder Ballenpressen. Die DE 10 2004 048 084 A1 offenbart eine als Zuführtrommel ausgebildete Trommel eines Mähdreschers. Derartige Mähdrescher umfassen eine Antriebswelle, einen konzentrisch um die Antriebswelle angeordneten Trommelmantel und an den Stirnseiten befindliche Trommelteller zur Befestigung des Trommelmantels auf der Antriebswelle. Die Trommelteller erstrecken sich senkrecht zur Antriebswelle und weisen an ihrem äußeren Durchmesser eine Abkantung auf, wobei die Abkantung mit dem Trommelmantel verschweißt ist. Im Erntebetrieb fördern außenseitig auf dem Trommelmantel angeordnete Gutführungselmente das Erntegut hin zu einer der Zuführtrommel prozesstechnisch nachgeordneten Abscheideeinrichtung. Insbesondere an der Zuführtrommel ist hierbei die Ausbildung von Staub und Materialresten, welche im Wesentlichen aus Kaff (Spreu), Grannen und anderen Verunreinigungen bestehen können, besonders ausgeprägt. Die Verunreinigungen gelangen durch einen zwischen dem stirnseitigen Ende des Trommelmantels und der Karossenseitenwand des Mähdreschers befindlichen Spalt. Durch die geringen Spaltmaße zwischen der Trommel und der Seitenwand ist ein entweichen der Verunreinigungen lediglich bedingt möglich. Die geringen Spaltmaße sind jedoch erforderlich, um ein Wickeln von Langstroh um die Antriebswelle zu vermeiden. Weiterhin sind aus montagetechnischen Gründen die Trommelteller beabstandet zu dem jeweiligen seitlichen Ende des Trommelmantels angeordnet, sodass sich zwischen dem Trommelteller und dem seitlichen Ende des Trommelmantels eine in axialer Richtung der Trommel erstreckende Fläche ausbildet. Nachteilig ist nun, dass sich innenseitig am Trommelmantel an dieser Fläche die Verunreinigungen sammeln und auf Grund der Fliehkräfte dort ablagern. Im Erntebetrieb baut sich eine immer größere Schicht an Ablagerung auf, die schließlich bei Rotation der Trommel an der Karossenseitenwand reiben und zu einer Unwucht der Trommel führen kann.

Es ist deshalb Aufgabe der Erfindung, die beschriebenen Nachteile des Standes der Technik zu vermeiden und insbesondere eine Trommel zu schaffen, an der das Ablagern von Verunreinigungen und Materialresten innenseitig am Trommelmantel verhindert wird.

Diese Aufgabe wird erfindungsgemäß durch die Merkmale des Anspruchs 1 gelöst.

Gemäß dem Anspruch 1 wird eine landwirtschaftliche Arbeitsmaschine, insbesondere Mähdrescher, mit einer zylindrisch ausgebildeten Trommel vorgeschlagen, wobei die Trommel zumindest eine Antriebswelle, einen die Antriebswelle konzentrisch umgebenden Trommelmantel und sich gegenüberliegende Stirnseiten umfasst. Erfindungsgemäß ist den Stirnseiten jeweils ein in Öffnungsrichtung zumindest abschnittsweise trichterförmig ausgebildetes Gutabweiselement zugeordnet. Mittels der trichterförmig ausgebildeten Gutabweiselemente werden Verunreinigungen, welche durch einen Spalt zwischen dem Ende der Trommel und einer parallel zu der jeweiligen Stirnseite angeordneten Karossenseitenwand gelangen, auf Grund der Fliehkraft entlang des trichterförmig ausgebildeten Gutabweiselements zurück in Richtung des Spalts und dort wieder nach außen getragen. Ein Absetzen von Verunreinigungen an einer sich in axiale Richtung erstreckende Fläche innenseitig am Trommelmantel wird durch das Gutabweiselement vermieden. Trichterförmig ist im Sinne der Erfindung so zu verstehen, dass das Gutabweiselement sich von innen aus der Trommel in Richtung der stirnseitigen Öffnung aufweitet. Die trichterförmigen Gutabweiselemente formen hierbei eine sich von innen aus der Trommel heraus im Wesentlichen kegelstumpfförmig aufweitende Stirnfläche der Trommel.

In einer vorteilhaften Weiterbildung können die zumindest abschnittsweise trichterförmig ausgebildeten Gutabweiselemente eine Mehrzahl von Gutleitkanälen umfassen, wobei die Gutleitkanäle die trichterförmigen Gutabweiselemente, insbesondere kreisausschnittförmig, segmentieren. Hierbei kann jeweils zwischen zwei Gutleitkanälen ein kreisauschnittförmiges Segment des Gutabweiselements angeordnet sein. Die trichterförmigen Gutleitkanäle unterstützen das Abfördern von an den Stirnseiten befindlichen Verunreinigungen. Vorteilhafterweise erstrecken sich die Gutleitkanäle hierfür in radialer Richtung der Trommel. In einer vorteilhaften Ausgestaltung können radial außenseitig von den Gutleitkanälen Aussparungen im Trommelmantel vorgesehen sein, sodass etwaige Verunreinigungen durch die Aussparungen aus der Trommel herausgetragen werden.

In einer vorteilhaften Ausgestaltung können außenseitig auf dem Trommelmantel Gutbearbeitungsmittel, insbesondere Gutführungselemente, angeordnet sein, wobei sich die Aussparungen zwischen zwei Gutbearbeitungsmitteln befinden, sodass die Verunreinigungen ungehindert entlang der Gutleitkanale und durch die Aussparungen aus der Trommel herausbefördert werden. Dementsprechend enden die Gutleitkanäle vorzugsweise radial außenseitig zwischen zwei beabstandet zueinander angeordneten Gutbearbeitungsmitteln.

Bevorzugt können separat an der Trommel angeordnete Einsätze die trichterförmigen Gutabweiselemente bilden, um eine einfache Nachrüstbarkeit und eine einfache Herstellbarkeit der Trommel sowie des Gutabweiselements zu ermöglichen.

In einer weiteren vorteilhaften Ausgestaltung können die Einsätze lösbar, vorzugsweise mittels einer Schraubverbindung, an der Trommel angeordnet sein. Hierdurch können die Einsätze auf besonders einfache Art und Weise an der Trommel befestigt werden.

Eine weitere vorteilhafte Weiterbildung sieht vor, dass die Einsätze jeweils als Ronde ausgebildet sein können, wobei die jeweilige Ronde zwei sich gegenüberliegende Grundseiten und eine radial außenseitig zwischen den Grundseiten befindliche Mantelfläche umfasst, wobei die erste Grundseite der jeweiligen Ronde eine trichterförmige Stirnfläche bildet. Eine derartige vorteilhafte Weiterbildung des Einsatzes ermöglicht es, dass Gutabweiselement auf besonders einfache Art und Weise in die bestehende Struktur der Trommel einzufügen.

Vorzugsweise kann die Trommel stirnseitg befindliche Trommelteller umfassen, wobei die Trommelteller sich im Wesentlichen senkrecht zur Antriebswelle erstrecken, wobei die Trommelteller ortsfest auf der Antriebswelle und ortsfest an der Innenseite des Trommelmantels angeordnet sind.

Bevorzugt kann die der ersten Grundseite gegenüberliegende zweite Grundseite der Ronde, insbesondere lösbar, an dem Trommelteller angeordnet sein. Dies ist besonders vorteilhaft, da somit herstellungsbedingte Öffnungen innerhalb des Trommeltellers mittels der Ronde auf einfache Art und Weise verschlossen werden können und ein Eindringen von Verunreinigungen in die Trommel vermieden wird.

In einer vorteilhaften Weiterbildung kann der Trommelteller eine innenseitig an der Mantelfläche anliegende Abkantung aufweisen, wobei radial außenseitig eines Gutleitkanals die Abkantung jeweils eine Aussparung aufweist. Eine derartige Ausgestaltung ermöglicht eine einfache Montage der Trommel, wobei durch die Aussparung innerhalb der Abkantung etwaige Verunreinigungen ungehindert mittels der Gutleitkanäle aus der Trommel, bzw. von den Stirnseiten der Trommel, abgefördert werden können.

Um das Ausbilden von Verunreinigungen innenseitig am Trommelmantel zu vermeiden, können in einer vorteilhaften Ausgestaltung die Gutabweiselemente in Öffnungsrichtung mit dem Ende des Trommelmantels abschließen.

Bevorzugt kann die Trommel als Zuführtrommel eines Mähdreschers ausgebildet sein. Da sich im Bereich der Zuführtrommel eines Mähdreschers besonders viel Staub ausbildet, gestaltet sich eine Zuordnung von Gutabweiselementen an den Stirnflächen der Zuführtrommel als besonders vorteilhaft.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen Ausschnitt eines Mähdreschers mit einem Dreschwerk und einer Abscheidevorrichtung in einer schematischen Seitenansicht;
- Figur 2a: eine Zuführtrommel mit einem der Stirnseite zugeordneten Gutabweiselement;
- Figur 2b: eine Schnittansicht der Stirnseite der Zuführtrommel;
- Figur 3: ein aus der Trommel herausgelöstes Gutabweiselement.

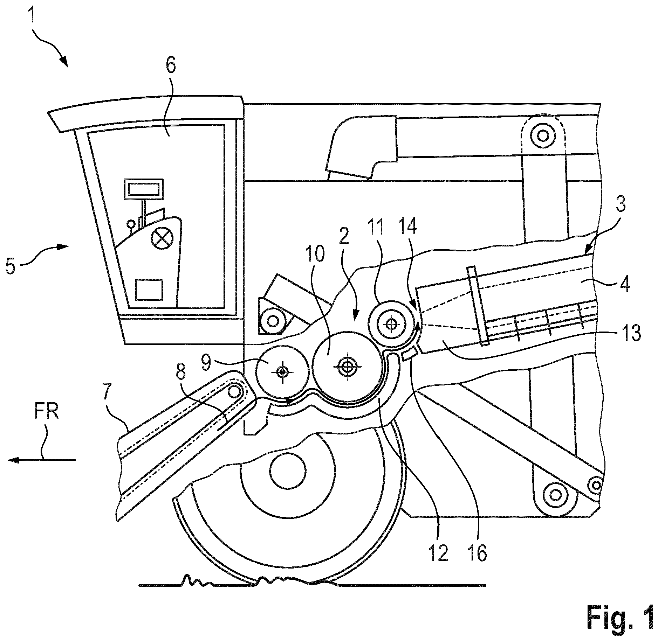

Figur 1 zeigt einen Ausschnitt einer an sich bekannten und als Mähdrescher 1 ausgebildeten landwirtschaftlichen Arbeitsmaschine mit einem Dreschwerk 2 und einer Abscheidevorrichtung 3 in einer schematischen Seitenansicht. Die Abscheidevorrichtung 3 umfasst hier zwei parallel nebeneinander angeordnete Axialrotoren 4, wobei in der gezeigten schematischen Darstellung lediglich der in Fahrtrichtung FR auf der linken Fahrzeugseite befindliche Axialrotor 4 erkenntlich ist.

Der Mähdrescher 1 weist eine Frontseite 5 auf, an der eine Fahrerkabine 6 für einen Bediener (nicht gezeigt) angeordnet ist. An der Frontseite 5 ist zudem ein Schneidwerk (nicht gezeigt) angeordnet, welches Erntegut (nicht gezeigt) aufnimmt. Das Schneidwerk leitet das Erntegut in einen unterhalb der Fahrerkabine angeordneten Schrägförderer 7, über den das Erntegut als Erntegutstrom 8 in das Dreschwerk 2 des Mähdreschers 1 geleitet wird.

Das Dreschwerk 2 weist im dargestellten Ausführungsbeispiel drei Gutbearbeitungsorgane 9, 10, 11 auf, nämlich eine Beschleunigungstrommel 9, die einer Dreschtrommel 10 vorgeordnet ist, die Dreschtrommel 10 sowie eine der Dreschtrommel 10 nachgeordnete Zuführtrommel 11. Die Beschleunigungstrommel 9 ist zum Beschleunigen und zum Vordreschen des Ernteguts sowie zum Zuführen des Ernteguts zur Dreschtrommel 10 vorgesehen. Die Dreschtrommel 10 drischt das Erntegut. Die Gutbearbeitungsorgane 9-11 des Dreschwerks 2 sind quer zur Fahrtrichtung FR angeordnet. Unterhalb der Beschleunigungstrommel 9 und der Dreschtrommel 10 ist ein Dreschkorb 12 angeordnet. Durch den Dreschkorb 12 wird gelöstes Korn (nicht gezeigt) aus dem Erntegutstrom 8 abgeschieden.

Die Zuführtrommel 11 übergibt das Erntegut einem dieser nachgeordneten Einlaufkopfgehäuse 13 der Abscheidevorrichtung 3, wobei das Einlaufkopfgehäuse 13 einen Einlaufbereich 14 für das von der Zuführtrommel 11 hin zu den Axialrotoren 4 geförderte Erntegut formt. Die Axialrotoren 4 sind an einem frontseitigen Einlaufende am Einlaufkopfgehäuse 13 gelagert. Die Zuführtrommel 11 ist im Ausführungsbeispiel als Trenntrommel ausgebildet, die den Erntegutstrom 8 in zwei Teilströme unterteilt, die jeweils einem der beiden Axialrotoren 4 zugeführt werden. Weiterhin kann unterhalb der Zuführtrommel 11 zusätzlich ein Einlaufsegment 16 angeordnet sein. Das Einlaufsegment 16 weist einen gegenüber der Zuführtrommel 11 größeren Durchmesser auf und umgibt die Zuführtrommel 11 zumindest teilweise. Es bildet eine Verlängerung des Einlaufbereichs 14 in die Abscheidevorrichtung 4. Darüber hinaus umfasst der Mähdrescher eine an sich bekannte und hier nicht näher erläuterte Reinigungseinrichtung.

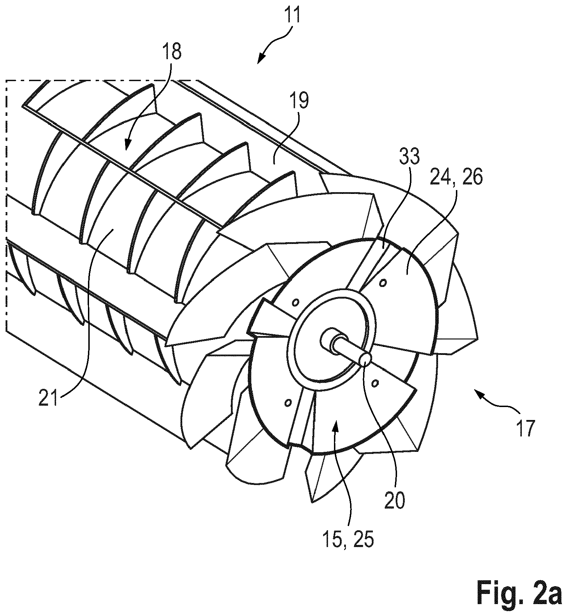

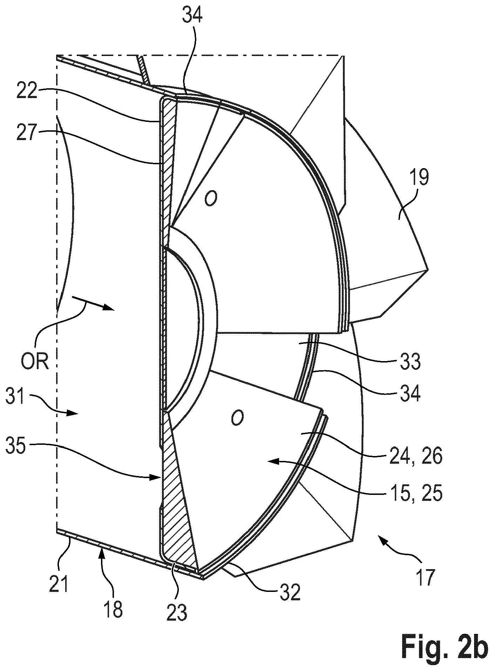

Figur 2a zeigt einen Ausschnitt der Zuführtrommel 11 mit einem der Zuführtrommel 11 zugeordneten Gutabweiselement 15 und Figur 2b zeigt die Stirnseite 17 der Zuführtrommel 11 entsprechend Figur 2a in einer Schnittansicht. Die Zuführtrommel 11 besteht im Wesentlichen aus einer zylindrisch ausgebildeten Trommel 18 mit außenseitig auf der Trommel 18 angeordneten Gutführungselementen 19. Die Trommel 18 wird von einer Antriebswelle 20 mit einem konzentrisch um die Antriebswelle 20 angeordneten endlos umlaufenden Trommelmantel 21 gebildet.

Zur Befestigung des Trommelmantels 21 an der Antriebswelle 20 umfasst die Trommel 18 stirnseitig befindliche Trommelteller 22. Hier und vorzugsweise erstrecken sich die Trommelteller 22 ausgehend von der Antriebswelle 20 in radialer Richtung und sind ortsfest auf der Antriebswelle 20 befestigt, beispielsweise verschweißt. Außenseitig weisen die Trommelteller 22 jeweils eine Abkantung 23 auf, die sich in Öffnungsrichtung OR der Trommel 18 innenseitig entlang des Trommelmantels 21 erstreckt und ortsfest mit dem Trommelmantel 21 verbunden ist.

Erfindungsgemäß sind den Stirnseiten 17 der Trommel 18 jeweils ein in Öffnungsrichtung OR zumindest abschnittsweise trichterförmig ausgebildetes Gutabweiselement 15 zugeordnet. Die trichterförmigen Gutabweiselemente 15 formen hierbei eine sich von innen aus der Trommel 18 heraus in Öffnungsrichtung OR aufweitende Stirnfläche 24 der Trommel 18. Das Gutabweiselement 15 ist im Ausführungsbeispiel als separater Einsatz 36 ausgebildet und lösbar mittels einer Schraubverbindung an dem Trommelteller 22 befestigt. In einer alternativen Ausgestaltung kann aber auch der Trommelteller 22 selbst das Gutabweiselement 15 formen bzw. einteilig mit dem Gutabweiselement 15 ausgebildet sein.

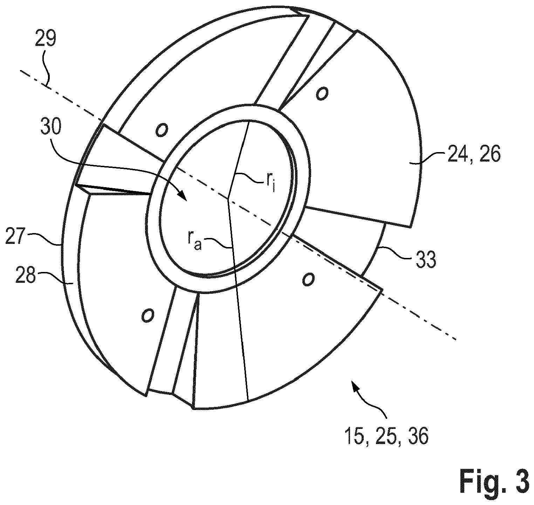

Der Einsatz 36 ist, wie in Figur 3 dargestellt, als Ronde 25 mit zwei sich gegenüberliegenden Grundseiten 26, 27 und einer äußeren, zwischen den sich gegenüberliegenden Grundseiten 26, 27 befindlichen Mantelfläche 28 geformt. Die Ronde 25 besitzt entlang ihrer Drehachse 29 eine Bohrung 30 und ist konzentrisch um die Antriebswelle 20 angeordnet. Der Abstand der sich gegenüberliegenden Grundseiten 26, 27 der Ronde 25 ist gegenüber dem Radius rₐ der Mantelfläche 28 gering. Die erste Grundseite 26 der Ronde 25 bildet die Stirnfläche 24 der Trommel 18, wobei sich die erste Grundseite 26 ausgehend von ihrem inneren Radius rᵢ hin zu ihrem äußeren Radius rₐ in axialer Richtung aufweitet. Die der ersten Grundseite 26 gegenüberliegende zweite Grundseite 27 der Ronde 25 ist eben ausgebildet und liegt an dem Trommelteller 22 an. Die Mantelfläche 28 der Ronde 25 liegt radial außenseitig an der Abkantung 23 des Trommeltellers 22 und an der Innenseite 31 des Trommelmantels 21 an. In Öffnungsrichtung OR schließt die Mantelfläche 28 mit dem Ende 32 des Trommelmantels 21 ab, sodass ein Ansammeln von Verunreinigungen innenseitig am Trommelmantel 21 vermieden wird. Zusammen mit dem Trommelteller 22 formt die Ronde 25 eine im Wesentlichen kegelstumpfförmige Öffnung an der jeweiligen Stirnseite 17 der Trommel 18.

An der Ronde 25 sind eine Mehrzahl von Gutleitkanälen 33 angeordnet, die sich in radialer Richtung der Trommel 18 erstrecken und die trichterförmige erste Grundseite 26 kreisausschnittförmig segmentieren. Hierbei weisen die Gutleitkanäle 33 ein rechteckiges Profil auf, welches sich als besonders vorteilhaft zur Vermeidung von Erntegutablagerungen erwiesen hat. In einer alternativen Ausgestaltung können die Gutleitkanäle 33 beispielsweise auch ein bogenförmiges Profil aufweisen. Radial außenseitig der Gutleitkanäle 33 befinden sich Aussparungen 34 sowohl innerhalb der Abkantung 23 des Trommeltellers 22 als auch innerhalb des Trommelmantels 21, sodass Verunreinigungen im Betriebszustand entlang der Gutleitkanäle 33 durch die Fliehkräfte nach außen geleitet werden. Die Aussparungen 34 befinden sich jeweils zwischen zwei außenseitig auf dem Trommelmantel 21 beabstandet zueinander angeordneten Gutführungselementen 19, mithin kann das Erntegut ungehindert durch die Gutleitkanäle 33 aus der Trommel 18 herausgeführt werden.

Fertigungsbedingt umfassen die Trommelteller 22 der im Ausführungsbeispiel dargestellte Trommel Öffnungen 35, durch die bei einem Tauchgang Farbe bzw. Lack in die Trommel 18 hineingelangt. Im montierten Zustand verschließt die Ronde 25, insbesondere mittels ihrer zweiten Grundseite 27, diese Öffnungen 35, sodass kein Erntegut in die Trommel 18 hineingelangt und weiterhin keine zusätzlichen Mittel zum Verschließen der Öffnungen 35 erforderlich sind.

Es sei darauf hingewiesen, dass unter anderem eine Fertigung der Ronde 25 als Frästeil, beispielsweise aus Kunststoff, oder als Tiefziehteil, beispielsweise aus Stahl, möglich ist.

### Bezugszeichenliste:

| | | | |
|---|---|---|---|
| 1 | Mähdrescher | 34 | Aussparungen |
| 2 | Dreschwerk | 35 | Öffnungen |
| 3 | Abscheidevorrichtung | 36 | Einsatz |
| 4 | Axialrotor | FR | Fahrtrichtung |
| 5 | Frontseite | OR | Öffnungsrichtung |
| 6 | Fahrerkabine | rₐ | Äußere Radius |
| 7 | Schrägförderer | rᵢ | Innere Radius |
| 8 | Erntegutstrom | | |
| 9 | Beschleunigungstrommel | | |
| 10 | Dreschtrommel | | |
| 11 | Zuführtrommel | | |
| 12 | Dreschkorb | | |
| 13 | Einlaufkopfgehäuse | | |
| 14 | Einlaufbereich | | |
| 15 | Gutabweiselement | | |
| 16 | Einlaufsegment | | |
| 17 | Stirnseite | | |
| 18 | Trommel | | |
| 19 | Gutführungselement | | |
| 20 | Antriebswelle | | |
| 21 | Trommelmantel | | |
| 22 | Trommelteller | | |
| 23 | Abkantung | | |
| 24 | Stirnfläche | | |
| 25 | Ronde | | |
| 26 | Erste Grundseite | | |
| 27 | Zweite Grundseite | | |
| 28 | Mantelfläche | | |
| 29 | Drehachse | | |
| 30 | Bohrung | | |
| 31 | Innenseite | | |
| 32 | Ende Trommelmantel | | |
| 33 | Gutleitkanal | | |

## Patentansprüche

1. Landwirtschaftliche Arbeitsmaschine, insbesondere Mähdrescher (1), mit einer zylindrisch ausgebildeten Trommel (18),
wobei die Trommel (18) zumindest eine Antriebswelle (20), einen die Antriebswelle (20) konzentrisch umgebenden Trommelmantel (21) und sich gegenüberliegende Stirnseiten (17) umfasst,
**dadurch gekennzeichnet, dass**
den Stirnseiten (17) jeweils ein in Öffnungsrichtung (OR) zumindest abschnittsweise trichterförmig ausgebildetes Gutabweiselement (15) zugeordnet ist, wobei sich das Gutabweiselement (15) von innen aus der Trommel (18) in Richtung einer stirnseitigen Öffnung aufweitet.

2. Landwirtschaftliche Arbeitsmaschine nach Anspruch 1, **dadurch gekennzeichnet, dass** die zumindest abschnittsweise trichterförmig ausgebildeten Gutabweiselemente (15) eine Mehrzahl von Gutleitkanälen (33) umfassen, wobei die Gutleitkanäle (33) die trichterförmigen Gutabweiselemente (15), insbesondere kreisausschnittförmig, segmentieren.

3. Landwirtschaftliche Arbeitsmaschine nach Anspruch 2, **dadurch gekennzeichnet, dass** radial außenseitig von den Gutleitkanälen (33) Aussparungen (34) im Trommelmantel (21) vorgesehen sind.

4. Landwirtschaftliche Arbeitsmaschine nach einem der Ansprüche 1 bis 3, **dadurch gekennzeichnet, dass** außenseitig auf dem Trommelmantel (21) Gutbearbeitungsmittel, insbesondere Gutführungselemente (19), angeordnet sind, wobei sich die Aussparungen (34) zwischen zwei Gutbearbeitungsmitteln befinden.

5. Landwirtschaftliche Arbeitsmaschine nach einem der Ansprüche 1 bis 4, **dadurch gekennzeichnet, dass** separat an der Trommel (18) angeordnete Einsätze (36) die trichterförmigen Gutabweiselemente (19) bilden.

6. Landwirtschaftliche Arbeitsmaschine nach Anspruch 5, **dadurch gekennzeichnet, dass** die Einsätze (36) lösbar, vorzugsweise mittels einer Schraubverbindung, an der Trommel (18) angeordnet sind.

7. Landwirtschaftliche Arbeitsmaschine nach einem der Ansprüche 5 bis 6, **dadurch gekennzeichnet, dass** die Einsätze jeweils als Ronde (25) ausgebildet sind, wobei die jeweilige Ronde (25) zwei sich gegenüberliegende Grundseiten (26, 27) und eine radial außenseitig zwischen den Grundseiten befindliche Mantelfläche (28) umfasst, wobei die erste Grundseite (26) der jeweiligen Ronde (25) eine trichterförmige Stirnfläche (24) bildet.

8. Landwirtschaftliche Arbeitsmaschine nach einem der Ansprüche 1 bis 7, **dadurch gekennzeichnet, dass** die Trommel (18) stirnseitg befindliche Trommelteller (22) umfasst, wobei die Trommelteller (22) sich im Wesentlichen senkrecht zur Antriebswelle (20) erstrecken, wobei die Trommelteller (22) ortsfest auf der Antriebswelle (20) und ortsfest an der Innenseite (31) des Trommelmantels (21) angeordnet sind.

9. Landwirtschaftliche Arbeitsmaschine nach Anspruch 8, **dadurch gekennzeichnet, dass** die der ersten Grundseite (26) gegenüberliegende zweite Grundseite (27) der Ronde (25), insbesondere lösbar, an dem Trommelteller (22) angeordnet ist.

10. Landwirtschaftliche Arbeitsmaschine nach einem der Ansprüche 8 bis 9, **dadurch gekennzeichnet, dass** der Trommelteller (22) eine innenseitig an der Mantelfläche (28) anliegende Abkantung (23) aufweist, wobei radial außenseitig eines Gutleitkanals (33) die Abkantung (23) eine Aussparung (34) aufweist.

11. Landwirtschaftliche Arbeitsmaschine nach einem der Ansprüche 1 bis 10, **dadurch gekennzeichnet, dass** die Gutabweiselemente (15) in Öffnungsrichtung (OR) mit dem Ende (32) des Trommelmantels (21) abschließen.

12. Landwirtschaftliche Arbeitsmaschine nach einem der Ansprüche 1 bis 11, **dadurch gekennzeichnet, dass** die Trommel (18) als Zuführtrommel (11) eines Mähdreschers (1) ausgebildet ist.

## Claims

1. Agricultural working machine, in particular combine harvester (1), with a cylindrically designed drum (18),
wherein the drum (18) comprises at least one drive shaft (20), a drum casing (21) concentrically surrounding the drive shaft (20) and opposing end faces (17),
**characterised in that**
the end faces (17) are each assigned a material deflector element (15) which is funnel-shaped at least in sections in the opening direction (OR), the material deflector element (15) widening from the inside of the drum (18) in the direction of an opening at the end face.

2. Agricultural working machine according to claim 1, **characterised in that** the crop deflecting elements (15), which are designed to be funnel-shaped at least in sections, comprise a plurality of crop guide channels (33), the crop guide channels (33) segmenting the funnel-shaped crop deflecting elements (15), in particular in the form of circular cut-outs.

3. Agricultural working machine according to claim 2, **characterised in that** recesses (34) are provided in the drum shell (21) radially on the outside of the crop guidance channels (33).

4. Agricultural working machine according to one of claims 1 to 3, **characterised in that** crop processing means, in particular crop guiding elements (19), are arranged on the outside of the drum shell (21), the recesses (34) being located between two crop processing means.

5. Agricultural working machine according to one of claims 1 to 4, **characterised in that** inserts (36) arranged separately on the drum (18) form the funnel-shaped crop deflector elements (19).

6. Agricultural working machine according to claim 5, **characterised in that** the inserts (36) are detachably arranged on the drum (18), preferably by means of a screw connection.

7. Agricultural working machine according to one of claims 5 to 6, **characterised in that** the inserts are each designed as a circular blank (25), wherein the respective circular blank (25) comprises two opposing base sides (26, 27) and a circumferential surface (28) located radially on the outside between the base sides, wherein the first base side (26) of the respective circular blank (25) forms a funnel-shaped end face (24).

8. Agricultural working machine according to one of claims 1 to 7, **characterised in that** the drum (18) comprises drum plates (22) located on the end face, wherein the drum plates (22) extend substantially perpendicularly to the drive shaft (20), wherein the drum plates (22) are arranged fixedly on the drive shaft (20) and fixedly on the inside (31) of the drum shell (21).

9. Agricultural working machine according to claim 8, **characterised in that** the second base side (27) of the disc (25) opposite the first base side (26) is arranged, in particular detachably, on the drum plate (22).

10. Agricultural working machine according to one of claims 8 to 9, **characterised in that** the drum plate (22) has a folded edge (23) resting on the inside of the circumferential surface (28), the folded edge (23) having a recess (34) radially on the outside of a crop guide channel (33).

11. Agricultural working machine according to one of claims 1 to 10, **characterised in that** the crop deflector elements (15) terminate in the opening direction (OR) with the end (32) of the drum shell (21).

12. Agricultural working machine according to one of claims 1 to 11, **characterised in that** the drum (18) is designed as a feed drum (11) of a combine harvester (1).

## Revendications

1. Machine de travail agricole, en particulier moissonneuse-batteuse (1), dotée d'un tambour (18) réalisé sous une forme cylindrique,
le tambour (18) comprenant au moins un arbre d'entraînement (20), une enveloppe de tambour (21) entourant de façon concentrique l'arbre d'entraînement (20), et des faces frontales (17) opposées,
**caractérisée en ce que**
respectivement un élément de rejet de produit (15) réalisé en forme d'entonnoir, au moins par portions, dans la direction d'ouverture (OR), est associé aux faces frontales (17), ledit élément de rejet de produit (15) s'élargissant de l'intérieur à partir du tambour (18), en direction d'une ouverture côté face frontale.

2. Machine de travail agricole selon la revendication 1, **caractérisée en ce que** les éléments de rejet de produit (15), réalisés en forme d'entonnoirs au moins par portions, comportent une pluralité de canaux de guidage de produit (33), les conduits de guidage de produit (33) segmentant les éléments de rejet de produit (15) en forme d'entonnoirs, notamment sous forme d'arcs de cercle.

3. Machine de travail agricole selon la revendication 2, **caractérisée en ce que** des évidements (34) sont prévus dans l'enveloppe de tambour (21), radialement à l'extérieur par rapport aux canaux de guidage de produit (33).

4. Machine de travail agricole selon l'une des revendications 1 à 3, **caractérisée en ce que** sur la face externe de l'enveloppe de tambour (21), il est prévu des moyens de traitement de produit, notamment des éléments de guidage de produit (19), les évidements (34) se trouvant entre deux moyens de traitement de produit.

5. Machine de travail agricole selon l'une des revendications 1 à 4, **caractérisée en ce que** des inserts (36) disposés séparément sur le tambour (18) constituent les éléments de rejet de produit (19) en forme d'entonnoirs.

6. Machine de travail agricole selon la revendication 5, **caractérisée en ce que** les inserts (36) sont disposés de façon amovible sur le tambour (18), de préférence à l'aide d'une liaison à vis.

7. Machine de travail agricole selon l'une des revendications 5 à 6, **caractérisée en ce que** les inserts sont réalisés respectivement sous forme de tôle ronde (25), la tôle ronde (25) respective comprenant deux faces de base (26, 27) opposées et une surface enveloppe (28) se situant radialement à l'extérieur, entre les faces de base, la première face de base (26) de la tôle ronde (25) respective constituant une face frontale (24) en forme d'entonnoir.

8. Machine de travail agricole selon l'une des revendications 1 à 7, **caractérisée en ce que** le tambour (18) comprend des plateaux de tambour (22) se situant côté faces frontales, les plateaux de tambour (22) s'étendant de façon sensiblement perpendiculaire à l'arbre d'entraînement (20), les plateaux de tambour (22) étant disposés de façon stationnaire sur l'arbre d'entraînement (20) et de façon stationnaire sur la face interne (31) de l'enveloppe de tambour (21).

9. Machine de travail agricole selon la revendication 8, **caractérisée en ce que** la deuxième face de base (27) de la tôle ronde (25) située en vis-à-vis de la première face de base (26) est disposée notamment de façon amovible sur le plateau de tambour (22).

10. Machine de travail agricole selon l'une des revendications 8 à 9, **caractérisée en ce que** le plateau de tambour (22) présente un chanfrein (23) qui est appliqué côté interne contre la surface d'enveloppe (28), ledit chanfrein (23) présentant un évidement (34) radialement à l'extérieur d'un canal de guidage de produit (33).

11. Machine de travail agricole selon l'une des revendications 1 à 10, **caractérisée en ce que** les éléments de rejet de produit (15) se terminent dans la direction d'ouverture (OR) au niveau de l'extrémité (32) de l'enveloppe de tambour (21).

12. Machine de travail agricole selon l'une des revendications 1 à 11, **caractérisée en ce que** le tambour (18) est réalisé comme tambour d'amenée (11) d'une moissonneuse-batteuse (1).
